# EUROPÄISCHE PATENTANMELDUNG

(11) **EP 1 045 565 A2**
(43) Veröffentlichungstag der Anmeldung: **18.10.2000**
(21) Anmeldenummer: 00107621.5
(22) Anmeldetag: 08.04.2000
(51) Int. Cl.: H04M 1/65, H04M 3/533

(54) **Verfahren zum Bearbeiten von Sprachnachrichten**

(30) Priorität: 14.04.1999 DE 19916681
(71) Anmelder: ALCATEL, 75008 Paris (FR)
(72) Erfinder: Hägebarth, Frank, 74366 Kirchheim (DE)
(74) Vertreter: Wörz, Volker Alfred

(57) **Zusammenfassung**

Die Erfindung betrifft ein Verfahren zum Bearbeiten von Sprachnachrichten (13), die auf einer Aufnahmevorrichtung (3) eingehen. Um das Bearbeiten der Sprachnachrichten (13) wesentlich einfacher, schneller und zuverlässiger zu gestalten, wird ein Verfahren vorgeschlagen, das gekennzeichnet ist durch die nachfolgenden Schritte:
- zu der eingehenden Sprachnachricht (13) werden automatisch die mittels Rufsignalisierung übermittelten Kenndaten (6) erfaßt (7),
- die Kenndaten (6) werden in ein elektronisches Formular (9) eingegeben (8),
- das Formular (9) wird als eine Textdatei (11) gespeichert (10),
- der Inhalt der Sprachnachricht (13) wird als eine Sprachdatei (14) gespeichert (12),
- die Textdatei (11) und die Sprachdatei (14) werden zu einer Sprachnachrichtendatei (15) zusammengefaßt (19),
- die Sprachnachrichtendatei (15) wird über ein Datennetzwerk (16) an eine Adresse (17) zur Weiterbearbeitung versandt (20) und
- eine Person (18) greift auf die Sprachnachrichtendatei (15) zu und bearbeitet die Sprachnachricht (13) weiter.

## Beschreibung

Die vorliegende Erfindung betrifft ein Verfahren zum Bearbeiten von Sprachnachrichten, die auf einer Aufnahmevorrichtung eingehen. Die Erfindung betrifft außerdem eine Aufnahmevorrichtung zur Aufnahme von Sprachnachrichten und eine Telekommunikations (TK) -Anlage mit mehreren zu einem Telekommunikations (TK) -Netzwerk zusammengeschlossenen Telekommunikations (TK)-Endgeräten. Schließlich betrifft die Erfindung einen Arbeitsplatz zum Bearbeiten einer Sprachnachricht, die gemäß diesem Verfahren bearbeitet worden ist.

Aufnahmevorrichtungen der eingangs genannten Art sind bspw. als Anrufbeantworter oder als Sprachboxen ausgebildet. Ein Anrufbeantworter wird in der Regel als Endgerät betrieben. Ein Anrufbeantworter kann Sprachnachrichten von Anrufern aufnehmen und speichern. Aus dem Stand der Technik sind Anrufbeantworter bekannt, die jede aufgenommene Sprachnachricht mit einem Datums- und Uhrzeitstempel versehen. Die Sprachnachrichten können zu einem späteren Zeitpunkt abgehört werden. Durch den Anrufbeantworter kann ein Anrufer einem Angerufenen eine Sprachnachricht zukommen lassen, obwohl der Angerufene unter der gewählten Rufnummer zur Zeit nicht erreichbar ist. Sprachboxen stellen eine Zusatzfunktion von Telekommunikations (TK) -Anlagen dar und entsprechen in ihrer Funktionalität weitgehend den Anrufbeantwortern.

Derartige Aufnahmevorrichtungen werden nicht nur im privaten sondern auch im professionellen Bereich, bspw. in sogenannten Call-Centern oder ähnlichen Einrichtungen, eingesetzt. Ein Call-Center umfaßt mehrere Personen (Mitarbeiter), die an Arbeitsplätzen mit einem Telekommunikations (TK) -Endgerät sitzen und bei dem Call-Center eingehende Anrufe entgegennehmen. Die Mitarbeiter des Call-Centers können die Anrufer beraten (z. B. bei Hotlines, Sorgentelefonen, etc.) oder aber Bestellungen der Anrufer entgegennehmen. Die TK-Endgeräte eines Call-Centers sind Teil einer oder mehrerer gemeinsamer TK-Anlagen. Die TK-Endgeräte eines Call-Centers sind in der Regel unter einer oder mehreren gemeinsamen Telefonnummern erreichbar. Die TK-Anlage leitet einen eingehenden Anruf automatisch an einen freien Arbeitsplatz weiter. Falls in dem Call-Center für einen eingehenden Anruf kein freier Arbeitsplatz zur Verfügung steht oder falls der Anruf außerhalb der Öffnungszeiten des Call-Centers eingeht, kann der Anruf auf eine Aufnahmevorrichtung weitergeleitet werden, die Teil der TK-Anlage ist. Der Anrufer erhält Gelegenheit, üblicherweise nach einer kurzen automatischen Ansage durch die Aufnahmevorrichtung, seinen Namen, seine Rufnummer, den Grund seines Anrufs und/oder andere Informationen als Sprachnachricht auf der Aufnahmevorrichtung zu hinterlassen.

Nach dem Stand der Technik werden die von einer Aufnahmevorrichtung aufgenommenen Sprachnachrichten derart weiterbearbeitet, daß sie von Mitarbeitern des Call-Centers oder anderen Personen abgehört und in Text umgewandelt werden. Zunächst werden die zu der Sprachnachricht gehörenden Kenndaten (z. B. Datum und Uhrzeit des Anrufs, Rufnummer des Anrufers, etc.) und dann der eigentliche Inhalt der Sprachnachricht (z. B. Grund des Anrufs, Gegenstand einer Bestellung, Kundenanfrage, etc.) erfaßt. Die erfaßten Kenndaten und Inhalte der Sprachnachricht werden in der Regel als Text in einen Computer eingegeben und dort gespeichert und zur Weiterbearbeitung bereitgestellt.

Diese aus dem Stand der Technik bekannte Bearbeitung der Sprachnachrichten birgt jedoch die Gefahr, daß im Rahmen der vielen Zwischenschritte, die vom Abhören der Sprachnachricht bis hin zum Speichern des erfaßten Textes in dem Computer durchlaufen werden müssen, der bearbeitenden Person ein Fehler unterläuft. Außerdem ist die bekannte Bearbeitung der Sprachnachrichten sehr arbeits- und zeitintensiv, so daß in einem Call-Center oder ähnlichen Einrichtungen die Erfassung von Sprachnachrichten durch eine Aufnahmevorrichtung nur als Notlösung für den Fall in Frage kommt, daß für einen eingehenden Anruf vorübergehend kein freier Arbeitsplatz zur Verfügung steht. Das bekannte Verfahren zum Bearbeiten von Sprachnachrichten, die auf einer Aufnahmevorrichtung eingehen, stellt somit keine echte Entlastung der Mitarbeiter eines Call-Centers oder ähnlicher Einrichtungen dar.

Es ist deshalb eine Aufgabe der vorliegenden Erfindung, ein Verfahren der eingangs genannten Art dahingehend auszugestalten und weiterzubilden, daß das Bearbeiten von Sprachnachrichten wesentlich einfacher, schneller und zuverlässiger erfolgt.

Zur Lösung dieser Aufgabe schlägt die Erfindung ausgehend von dem Verfahren der eingangs genannten Art ein Verfahren vor, das gekennzeichnet ist durch die nachfolgenden Schritte:
- zu der eingehenden Sprachnachricht werden automatisch die mittels Rufsignalisierung übermittelten Kenndaten erfaßt,
- die Kenndaten werden in ein elektronisches Formular eingegeben,
- das Formular wird als eine Textdatei gespeichert,
- der Inhalt der Sprachnachricht wird als eine Sprachdatei gespeichert,
- die Textdatei und die Sprachdatei werden zu einer Sprachnachrichtendatei zusammengefaßt,
- die Sprachnachrichtendatei wird über ein Datennetzwerk an eine Adresse zur Weiterbearbeitung versandt und
- eine Person greift auf die Sprachnachrichtendatei zu und bearbeitet die Sprachnachricht weiter.

Die Aufnahmevorrichtung, auf der die Sprachnachricht eingeht, kann entweder einem einzelnen TK-Endgerät zugeordnet oder aber Teil einer TK-Anlage mit mehreren TK-Endgeräten sein.

Bei dem erfindungsgemäße Verfahren werden zunächst die mittels Rufsignalisierung übermittelten, zu der eingehenden Sprachnachricht gehörenden Kenndaten automatisch erfaßt und in ein elektronisches Formular eingegeben. Die Kenndaten umfassen vorteilhafterweise zumindest das Datum und die Uhrzeit des Eingangs der Sprachnachricht. Des weiteren ist es denkbar, daß die Kenndaten die Rufnummer des Anrufers umfassen. Anhand der Rufnummer des Anrufers können auch weitere anruferbezogene Informationen ermittelt werden, die ebenfalls in das Formular eingegeben werden können. Die anruferbezogenen Informationen umfassen bspw. den Namen, die Anschrift, den Beruf, die Bankverbindung und/oder ein Foto des Anrufers. Die anruferbezogenen Informationen können anhand der Rufnummer des Anrufers aus einer Datenbank o. ä. aufgerufen werden.

Die Kenndaten werden vorzugsweise mittels Rufsignalisierung von dem Endgerät des Anrufers an die Aufnahmevorrichtung oder die TK-Anlage übermittelt. Es ist jedoch auch denkbar, daß die Kenndaten von dem Anrufer auf die Aufnahmevorrichtung gesprochen werden. In diesem Fall werden die Kenndaten dann durch geeignete Spracherkennungsmittel in Text umgewandelt, der dann in das Formular eingegeben wird.

Anschließend wird das Formular als Textdatei gespeichert. Ebenso wird die Sprachnachricht als eine Sprachdatei gespeichert. Die Textdatei und die Sprachdatei werden zu einer Sprachnachrichtendatei zusammengefaßt. Durch das Zusammenfassen der Sprachnachricht und des Formulars zu einer einzigen Datei sind sie besonders einfach handhabbar. Der Inhalt der Sprachnachricht liegt nach wie vor im Original vor und kann jederzeit abgehört werden. Das Formular mit den wichtigsten Kenndaten der Sprachnachricht liegt in Form einer leicht bearbeitbaren und speicherplatzsparenden Textdatei vor.

Die zusammengefaßte Sprachnachrichtendatei wird zum Zwecke der Weiterbearbeitung über ein Datennetzwerk an eine bestimmte Adresse versandt. Zur Weiterbearbeitung der Sprachnachrichtendatei kann eine Person auf die Sprachnachrichtendatei zugreifen. Die Person ist bspw. der Mitarbeiter eines Call-Centers oder einer ähnlichen Einrichtung, der nach Abschluß der Aufnahme der Sprachnachricht durch die Aufnahmevorrichtung und der vorausgegangenen Verfahrensschritte als nächster frei wird.

Das Datennetzwerk kann bspw. als ein firmeninternes Intranet oder als ein weltumspannendes Datennetzwerk, wie bspw. das Internet, ausgebildet sein. Das erfindungsgemäße Verfahren eignet sich insbesondere zur Verbesserung der Kommunikation innerhalb eines Unternehmens. Eine auf eine Aufnahmevorrichtung aufgenommene Sprachnachricht kann schnell und zuverlässig an die zuständige Person in dem Unternehmen weitergeleitet werden. Der zuständigen Person werden die Kenndaten und der Inhalt der Sprachnachricht automatisch und übersichtlich zur Verfügung gestellt. Das Verfahren eignet sich auch zur Entlastung der Mitarbeiter in einem Call-Center oder in ähnlichen Einrichtungen. Auf eine zeitaufwendige und fehleranfällige Aufnahme der Kenndaten einer auf einer Aufnahmevorrichtung gespeicherten Sprachnachricht durch einen Mitarbeiter des Call-Centers kann bei dem erfindungsgemäßen Verfahren verzichtet werden, da dies innerhalb kürzester Zeit und automatisch geschieht. Die Mitarbeiter des Call-Centers können sich voll und ganz auf den eigentlichen Inhalt der Sprachnachricht, der in der Sprachdatei gespeichert ist, konzentrieren.

Bei dem erfindungsgemäßen Verfahren werden die Kenndaten einer auf eine Aufnahmevorrichtung aufgenommenen Sprachnachricht automatisch ermittelt und in einem elektronischen Formular abgespeichert. Durch die automatische Eingabe der Kenndaten in das Formular können Fehler bei der Bearbeitung der Sprachnachricht vermieden werden. Zudem erfolgt die automatische Eingabe der Kenndaten in das Formular besonders schnell.

Das erfindungsgemäße Verfahren wird zumindest teilweise von der Aufnahmevorrichtung gesteuert. Das Verfahren läuft vorzugsweise auf der Aufnahmevorrichtung ab. Es ist aber auch denkbar, daß das Verfahren auf anderen Geräten, die Teil der TK-Anlage sind, abläuft.

Die Sprachnachrichtendatei kann beliebige Formate haben. Gemäß einer vorteilhaften Weiterbildung der vorliegenden Erfindung wird vorgeschlagen, daß die Sprachnachrichtendatei als eine elektronische Nachricht (electronic mail, eMail) ausgebildet ist, die als Anhang die Sprachdatei enthält und die über das Datennetzwerk an die Adresse eines Arbeitsplatzes der Person gesandt wird, die die Sprachnachricht weiter bearbeitet. Um auf die empfangene Sprachnachrichtendatei zugreifen zu können, lädt die Person die empfangene eMail von einem eMail-Server des Datennetzwerks bspw. in einen Computer an ihrem Arbeitsplatz herunter. Die Person kann dann unmittelbar an ihrem Computer die Sprachnachricht weiter bearbeiten.

Gemäß einer anderen vorteilhaften Weiterbildung der vorliegenden Erfindung wird vorgeschlagen, daß die Sprachnachrichtendatei als eine Web-Seite (website) ausgebildet ist, die über das Datennetzwerk auf einem Web-Server abgelegt wird, wobei die Person, die die Sprachnachricht weiter bearbeitet, von ihrem Arbeitsplatz aus auf die Web-Seite zugreift. An ihrem Arbeitsplatz hat die Person bspw. einen Computer, über den sie über ein weiteres Datennetzwerk auf den Web-Server und die darauf abgelegte Web-Seite zugreifen kann. Die Person kann der Web-Seite die Kenndaten des Anrufs und die Sprachnachricht entnehmen. Das Datennetzwerk, über das die Web-Seite auf dem Web-Server abgelegt wird, und das weitere Datennetzwerk, über das die Person Zugriff auf den Web-Server hat, können als zwei verschiedene Datennetzwerke oder aber als dasselbe Datennetzwerk ausgebildet sein. So kann das Datennetzwerk bspw. als firmeninternes Intranet und das weitere Datennetzwerk als das Internet ausgebildet sein.

Gemäß einer bevorzugten Ausführungsform der Erfindung wird vorgeschlagen, daß die Weiterbearbeitung der Sprachnachricht die Umwandlung der Sprachnachricht in einen Text und die Eingabe des Texts in das Formular umfaßt. Auf diese Weise kann bspw. bei der Aufnahme von telefonischen Bestellungen eines Auftraggebers durch einen Auftragnehmer ein gemäß den in der Sprachnachricht enthaltenen Angaben fertig ausgefülltes Auftragsformular mit Name und Anschrift des Auftraggebers, Name und Anschrift des Belieferten und mit den bestellten Waren oder Dienstleistungen erstellt werden. Die Weiterbearbeitung der Sprachnachricht kann auch die Übermittlung einer Bestätigung an den Auftraggeber oder die Mitteilung eines Liefertermins an den Belieferten umfassen. Schließlich kann die Weiterbearbeitung auch ein Weiterleiten der Sprachnachrichtendatei an eine andere Adresse zur weiteren Bearbeitung umfassen.

Um beim Speichern der Sprachnachrichtendatei Speicherplatz zu sparen, ist es denkbar, daß zumindest die Sprachdatei vor dem Speichern nach einem beliebigen Komprimierungsverfahren komprimiert wird.

Es ist eine weitere Aufgabe der vorliegenden Erfindung, eine Aufnahmevorrichtung der eingangs genannten Art dahingehend auszugestalten und weiterzubilden, daß sie die Bearbeitung von Sprachnachrichten zumindest teilweise übernimmt und dadurch das Bearbeiten von Sprachnachrichten wesentlich einfacher, schneller und zuverlässiger erfolgt.

Zur Lösung dieser Aufgabe schlägt die Erfindung eine Aufnahmevorrichtung der eingangs genannten Art vor, die gekennzeichnet ist durch
- Mittel zum automatischen Erfassen der mittels Rufsignalisierung übermittelten und zu der eingehenden Sprachnachricht gehörenden Kenndaten,
- Mittel zur Eingabe der Kenndaten in ein elektronisches Formular,
- Mittel zum Speichern des Formulars als eine Textdatei,
- Mittel zum Speichern des Inhalts der Sprachnachricht als eine Sprachdatei,
- Mittel zum Zusammenfassen der Textdatei und der Sprachdatei zu einer Sprachnachrichtendatei und
- Mittel zum Versenden der Sprachnachrichtendatei über ein Datennetzwerk an eine Adresse zur Weiterbearbeitung.

Gemäß einer vorteilhaften Weiterbildung der vorliegenden Erfindung wird vorgeschlagen, daß die Mittel zum Zusammenfassen die Textdatei in eine elektronische Nachricht (electronic mail, eMail) umwandeln, die als Anhang die Sprachdatei enthält, und die Mittel zum Versenden die eMail über das Datennetzwerk an die Adresse eines Arbeitsplatzes einer Person senden, die die Sprachnachricht weiter bearbeitet.

Gemäß einer anderen vorteilhaften Weiterbildung der Erfindung wird vorgeschlagen, daß die Mittel zum Zusammenfassen anhand der Sprachnachrichtendatei eine Web-Seite (website) erzeugen und die Mittel zum Versenden die Web-Seite über das Datennetzwerk auf einem Web-Server ablegen, auf den eine Person, die die Sprachnachricht weiter bearbeitet, zugreift. Die Person greift vorzugsweise über einen Computer von ihrem Arbeitsplatz aus auf den Web-Server und die darauf abgelegte Web-Seite zu.

Vorteilhafterweise ist die Aufnahmevorrichtung Teil einer Telekommunikations (TK)-Anlage. Die Mittel zum Speichern des Inhalts der Sprachnachricht als eine Sprachdatei weisen vorzugsweise Mittel zum Komprimieren der Sprachdatei vor dem Speichern auf.

Die Sprachnachrichtendatei wird über das Datennetzwerk von der Aufnahmevorrichtung an eine bestimmte Adresse versandt. Eine Person, die die Sprachdatei weiterbearbeitet, hat entweder unmittelbar oder aber über ein weiteres Datennetzwerk Zugriff auf die Sprachnachrichtendatei. Die beiden Datennetzwerke können als zwei verschiedene Datennetzwerke oder aber als dasselbe Datennetzwerk ausgebildet sein. Gemäß einer bevorzugten Ausführungsform ist das Datennetzwerk als ein firmeninternes Intranet ausgebildet. Alternativ wird vorgeschlagen, daß das Datennetzwerk als ein weltumspannendes Datennetzwerk, insbesondere als das Internet, ausgebildet ist.

Die erfindungsgemäße Aufnahmevorrichtung wird vorzugsweise in einer TK-Anlage mit mehreren zu einem TK-Netzwerk zusammengeschlossenen TK-Endgeräten eingesetzt.

Es ist eine weitere Aufgabe der vorliegenden Erfindung, einen Arbeitsplatz der eingangs genannten Art dahingehend auszugestalten und weiterzubilden, daß an ihm Sprachnachrichten weiter bearbeitet werden können, die davor nach dem erfindungsgemäßen Verfahren bearbeitet worden sind.

Zur Lösung dieser Aufgabe schlägt die Erfindung einen Arbeitsplatz der eingangs genannten Art vor, der gekennzeichnet ist durch
- Mittel zum Zugriff auf eine Sprachnachrichtendatei, die ein als Textdatei vorhandenes teilweise ausgefülltes elektronisches Formular und den als Sprachdatei vorhandenen Inhalt der Sprachnachricht umfaßt,
- Mittel zur Ausgabe des Inhalts der Textdatei,
- Mittel zur Ausgabe des Inhalts der Sprachdatei,
- Mittel zur Entgegennahme des in Text umgewandelten Inhalts der Sprachdatei und zur Eingabe des Inhalts in die Textdatei und
- Mittel zur Bereitstellung der Textdatei für eine Weiterbearbeitung.

Der Inhalt der Textdatei wird bspw. auf einem Bildschirm eines Computers dargestellt. Der Inhalt der Sprachdatei kann mittels einer Soundkarte und Lautsprecher auf einem Computer ausgegeben werden.

Der Inhalt der Sprachdatei kann von einer Person, bspw. von einem Mitarbeiter eines Call-Centers oder einer ähnlichen Einrichtung, in Text umgewandelt werden. Alternativ wird gemäß einer vorteilhaften Weiterbildung der Erfindung vorgeschlagen, daß der Arbeitsplatz Mittel zum Umwandeln des Inhalts der Sprachdatei in Text aufweist.

Ein bevorzugtes Ausführungsbeispiel der vorliegenden Erfindung wird im Folgenden anhand der Zeichnung näher erläutert. Es zeigt:
- Fig. 1: eine symbolische Darstellung einer erfindungsgemäßen Telekommunikations-Anlage zur Verdeutlichung des erfindungsgemäßen Verfahrens; und
- Fig. 2: ein Ablaufdiagramm des erfindungsgemäßen Verfahrens.

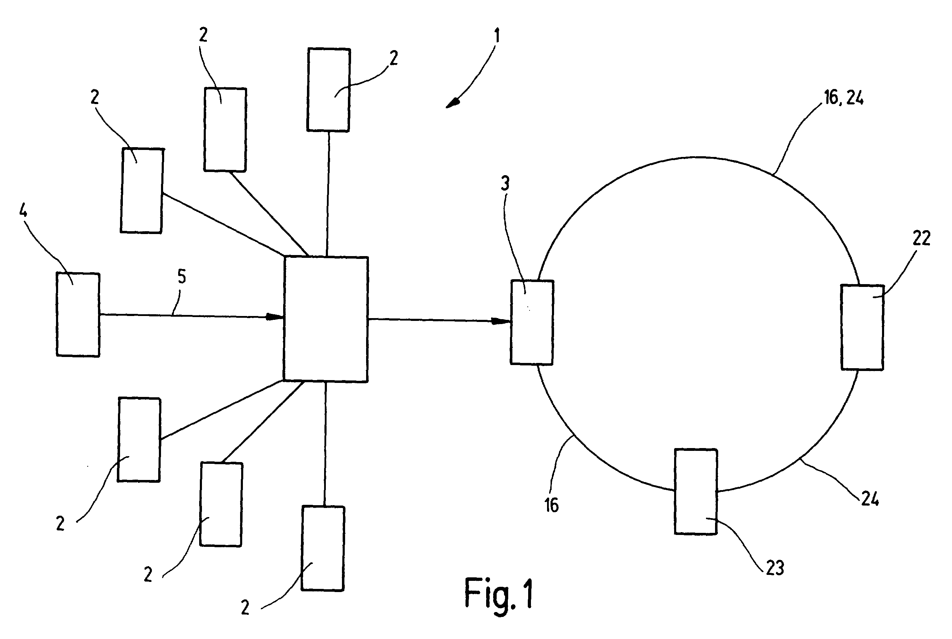

In Fig. 1 ist eine erfindungsgemäßes Telekommunikations (TK)-Anlage in ihrer Gesamtheit mit dem Bezugszeichen 1 gekennzeichnet. Die TK-Anlage 1 weist sechs zu einem TK-Netzwerk zusammengeschlossene TK-Endgeräte 2 auf. Darüber hinaus verfügt die TK-Anlage 1 über eine Aufnahmevorrichtung 3 zur Aufnahme von Sprachnachrichten. Die TK-Anlage 1 ist der Kern eine Call-Centers. Ein TK-Endgerät 2 ist Teil eines Arbeitsplatzes, an dem ein Mitarbeiter des Call-Centers sitzt und Fragen von Anrufern beantwortet oder Bestellungen von Anrufern entgegennimmt.

Wenn ein Anrufer über ein TK-Endgerät 4 das Call-Center anrufen möchte, wählt er die Rufnummer des Call-Centers. Die TK-Anlage 1 leitet den eingehenden Anruf 5 automatisch an das Endgerät 2 eines freien Arbeitsplatzes weiter. Falls in dem Call-Center für einen eingehenden Anruf 5 kein freier Arbeitsplatz zur Verfügung steht oder falls der Anruf 5 außerhalb der Öffnungszeiten des Call-Centers eingeht, wird der Anruf 5 auf die Aufnahmevorrichtung 3 weitergeleitet. Der Anrufer kann dann nach einer kurzen Ansage durch die Aufnahmevorrichtung 3 seinen Namen, seine Rufnummer, den Grund seines Anrufs und/oder andere Informationen als Sprachnachricht 13 auf der Aufnahmevorrichtung 3 hinterlassen.

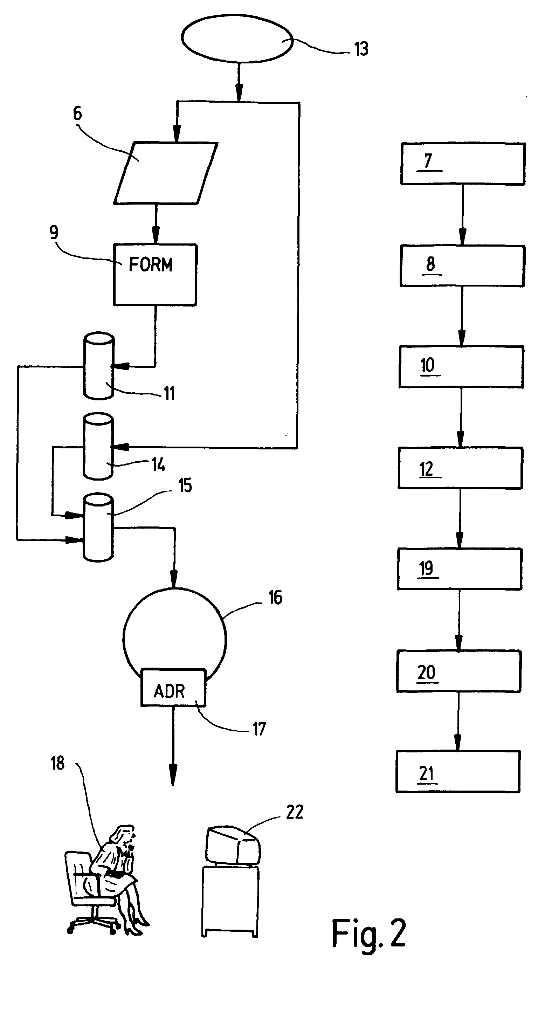

Die Sprachnachricht 13 wird nach dem in Fig. 2 als Ablaufdiagramm dargestellten erfindungsgemäßen Verfahren bearbeitet. Mit dem eingehenden Anruf 5 werden mittels Rufsignalisierung zu der eingehenden Sprachnachricht 13 gehörende Kenndaten 6 an die TK-Anlage 1 übermittelt. In einem ersten Verfahrensschritt 7 werden die Kenndaten 6 automatisch erfaßt. Dann werden in einem Verfahrensschritt 8 die Kenndaten 6 in ein elektronisches Formular 9 eingegeben. Die Kenndaten 6 umfassen das Datum und die Uhrzeit des Eingangs des Anrufs 5. Des weiteren umfassen die Kenndaten 6 die Rufnummer des Anrufers. Anhand der Rufnummer des Anrufers werden weitere anruferbezogene Informationen aus einer Datenbank o. ä. aufgerufen, und ebenfalls in das Formular 9 eingegeben. Die anruferbezogenen Informationen umfassen bspw. den Namen, die Anschrift, den Beruf, die Bankverbindung und/oder ein Foto des Anrufers.

In einem anschließenden Verfahrensschritt 10 wird das Formular 9 als Textdatei 11 gespeichert. Ebenso wird in einem nachfolgenden Verfahrensschritt 12 der eigentliche Inhalt des Anrufs 5, die Sprachnachricht 13, als eine Sprachdatei 14 gespeichert. Dann werden in einem Verfahrensschritt 19 die Textdatei 11 und die Sprachdatei 14 werden zu einer Sprachnachrichtendatei 15 zusammengefaßt. Der Inhalt der Sprachnachricht 13 liegt nach wie vor im Original vor und kann jederzeit abgehört werden. Das Formular 9 mit den Kenndaten 6 der Sprachnachricht 13 liegt in Form der leicht bearbeitbaren und speicherplatzsparenden Textdatei 11 vor.

Die zusammengefaßte Sprachnachrichtendatei 15 wird in einem Verfahrensschritt 20 zum Zwecke der Weiterbearbeitung über ein Datennetzwerk 16 an eine Adresse 17 versandt. Zur Weiterbearbeitung der Sprachnachrichtendatei 15 kann ein Mitarbeiter 18 des Call-Centers auf die Sprachnachrichtendatei 15 zugreifen (Verfahrensschritt 21). Die TK-Anlage 1 oder die Aufnahmevorrichtung 3 kann die Weiterbearbeitung der Sprachnachrichtendatei 15 so steuern, daß derjenige Mitarbeiter 18 die Weiterbearbeitung übernimmt, der nach Abschluß der Aufnahme der Sprachnachricht 13 durch die Aufnahmevorrichtung 3 und der vorausgegangenen Verfahrensschritte als nächster frei wird.

Das Datennetzwerk 16 ist bspw. als ein firmeninternes Intranet oder als ein weltumspannendes Datennetzwerk, wie bspw. das Internet, ausgebildet. Das erfindungsgemäße Verfahren eignet sich insbesondere zur Verbesserung der Kommunikation innerhalb eines Unternehmens. Eine auf eine Aufnahmevorrichtung 3 aufgenommene Sprachnachricht 13 kann schnell und zuverlässig an die zuständige Person 18 in dem Unternehmen weitergeleitet werden. Der zuständigen Person 18 werden die Kenndaten 6 und der Inhalt der Sprachnachricht 13 automatisch und übersichtlich zur Verfügung gestellt.

Das Verfahren eignet sich auch zur Entlastung der Mitarbeiter 18 in einem Call-Center oder in ähnlichen Einrichtungen. Auf eine zeitaufwendige und fehleranfällige Aufnahme der Kenndaten 6 einer auf der Aufnahmevorrichtung 3 gespeicherten Sprachnachricht 13 durch einen Mitarbeiter 18 des Call-Centers kann bei dem erfindungsgemäßen Verfahren verzichtet werden, da dies automatisch geschieht. Die Mitarbeiter 18 des Call-Centers können sich voll und ganz auf den eigentlichen Inhalt der Sprachnachricht 13, der in der Sprachdatei 14 gespeichert ist, konzentrieren.

Bei dem erfindungsgemäßen Verfahren werden die Kenndaten 6 einer auf eine Aufnahmevorrichtung 3 aufgenommenen Sprachnachricht 13 automatisch ermittelt und in einem elektronischen Formular 9 abgespeichert. Durch die automatische Eingabe der Kenndaten 6 in das Formular 9 können Fehler bei der Bearbeitung der Sprachnachricht 13 vermieden werden. Zudem erfolgt die automatische Eingabe der Kenndaten 6 in das Formular 9 besonders schnell.

Die Sprachnachrichtendatei 15 kann beliebige Formate haben. Die Sprachnachrichtendatei 15 kann bspw. als eine elektronische Nachricht (electronic mail, eMail) ausgebildet sein, die als Anhang die Sprachdatei 14 enthält und die über das Datennetzwerk 16 an die Adresse 17 eines Arbeitsplatzes der Person 18 gesandt wird, die die Sprachnachricht 13 weiter bearbeitet. Um auf die empfangene Sprachnachrichtendatei 15 zugreifen zu können, lädt die Person 15 die empfangene eMail von einem eMail-Server des Datennetzwerks 16 bspw. in einen Computer 22 an ihrem Arbeitsplatz herunter. Die Person 18 kann die Sprachnachricht 13 dann unmittelbar an ihrem Computer 22 weiter bearbeiten.

Es ist des weiteren denkbar, daß die Sprachnachrichtendatei 15 als eine Web-Seite (website) ausgebildet ist, die über das Datennetzwerk 16 auf einem Web-Server 23 abgelegt wird, wobei die Person 18, die die Sprachnachricht 13 weiter bearbeitet, von ihrem Arbeitsplatz aus auf die Web-Seite zugreifen kann. An ihrem Arbeitsplatz hat die Person 18 bspw. einen Computer 22, über den sie über ein weiteres Datennetzwerk 24 (vgl. Fig. 1) auf den Web-Server 23 und die darauf abgelegte Web-Seite zugreifen kann. Die Person 18 kann der Web-Seite die Kenndaten 6 des Anrufs 5 und die Sprachnachricht 13 entnehmen.

Das Datennetzwerk 16, über das die Web-Seite auf dem Web-Server 23 abgelegt wird, und das weitere Datennetzwerk 24, über das die Person 18 Zugriff auf den Web-Server 23 hat, können als zwei verschiedene Datennetzwerke oder aber als dasselbe Datennetzwerk ausgebildet sein. In Fig. 1 sind beide Datennetzwerke als dasselbe Datennetzwerk 16, 24 dargestellt, das als das Internet ausgebildet ist.

## Patentansprüche

1. Verfahren zum Bearbeiten von Sprachnachrichten (13), die auf einer Aufnahmevorrichtung (3) eingehen,
**gekennzeichnet durch** die nachfolgenden Schritte:
- zu der eingehenden Sprachnachricht (13) werden automatisch die mittels Rufsignalisierung übermittelten Kenndaten (6) erfaßt (7),
- die Kenndaten (6) werden in ein elektronisches Formular (9) eingegeben (8),
- das Formular (9) wird als eine Textdatei (11) gespeichert (10),
- der Inhalt der Sprachnachricht (13) wird als eine Sprachdatei (14) gespeichert (12),
- die Textdatei (11) und die Sprachdatei (14) werden zu einer Sprachnachrichtendatei (15) zusammengefaßt (19),
- die Sprachnachrichtendatei (15) wird über ein Datennetzwerk (16) an eine Adresse (17) zur Weiterbearbeitung versandt (20) und
- eine Person (18) greift auf die Sprachnachrichtendatei (15) zu und bearbeitet die Sprachnachricht (13) weiter.

2. Verfahren nach Anspruch 1, dadurch gekennzeichnet, daß die mittels Rufsignalisierung übermittelten Kenndaten (6) zumindest das Datum und die Uhrzeit des Eingangs der Sprachnachricht (13) umfassen.

3. Verfahren nach Anspruch 2, dadurch gekennzeichnet, daß die mittels Rufsignalisierung übermittelten Kenndaten (6) die Rufnummer des Anrufers umfassen.

4. Verfahren nach Anspruch 3, dadurch gekennzeichnet, daß anhand der Rufnummer des Anrufers weitere anruferbezogene Informationen ermittelt werden, die in das Formular (9) eingegeben werden.

5. Verfahren nach Anspruch 4, dadurch gekennzeichnet, daß die weiteren anruferbezogenen Informationen den Namen, die Anschrift, den Beruf, die Bankverbindung und/oder ein Foto des Anrufers umfassen.

6. Verfahren nach einem der Ansprüche 1 bis 5, dadurch gekennzeichnet, daß die Sprachnachrichtendatei (15) als eine elektronische Nachricht (electronic mail, eMail) ausgebildet ist, die als Anhang die Sprachdatei (14) enthält und die über das Datennetzwerk (16) an die Adresse (17) eines Arbeitsplatzes der Person (18) gesandt wird, die die Sprachnachricht (13) weiter bearbeitet.

7. Verfahren nach einem der Ansprüche 1 bis 5, dadurch gekennzeichnet, daß die Sprachnachrichtendatei (15) als eine Web-Seite (website) ausgebildet ist, die über das Datennetzwerk (16) auf einem Web-Server (23) abgelegt wird, wobei die Person (18), die die Sprachnachricht (13) weiter bearbeitet, von ihrem Arbeitsplatz aus auf die Web-Seite zugreift.

8. Verfahren nach einem der Ansprüche 1 bis 7, dadurch gekennzeichnet, daß die Weiterbearbeitung der Sprachnachricht (13) die Umwandlung der Sprachnachricht (13) in einen Text und die Eingabe des Texts in das Formular (9) umfaßt.

9. Verfahren nach einem der Ansprüche 1 bis 8, dadurch gekennzeichnet, daß zumindest die Sprachdatei (14) vor dem Speichern komprimiert wird.

10. Verwendung des Verfahrens nach einem der Ansprüche 1 bis 9 zur Aufnahme von Bestellungen eines Auftraggebers durch einen Auftragnehmer.

11. Aufnahmevorrichtung (3) zur Aufnahme von Sprachnachrichten (13), **gekennzeichnet durch**
- Mittel zum automatischen Erfassen der mittels Rufsignalisierung übermittelten und zu der eingehenden Sprachnachricht (13) gehörenden Kenndaten (6),
- Mittel zur Eingabe der Kenndaten (6) in ein elektronisches Formular (9),
- Mittel zum Speichern des Formulars (9) als eine Textdatei (11),
- Mittel zum Speichern des Inhalts der Sprachnachricht (13) als eine Sprachdatei (14),
- Mittel zum Zusammenfassen der Textdatei (11) und der Sprachdatei (14) zu einer Sprachnachrichtendatei (15) und
- Mittel zum Versenden der Sprachnachrichtendatei (15) über ein Datennetzwerk (16) an eine Adresse (17) zur Weiterbearbeitung.

12. Aufnahmevorrichtung (3) nach Anspruch 11, dadurch gekennzeichnet, daß die Mittel zum Zusammenfassen die Textdatei (11) in eine elektronische Nachricht (electronic mail, eMail) umwandeln, die als Anhang die Sprachdatei (14) enthält, und die Mittel zum Versenden die eMail über das Datennetzwerk (16) an die Adresse (17) eines Arbeitsplatzes einer Person (18) senden, die die Sprachnachricht (13) weiter bearbeitet.

13. Aufnahmevorrichtung (3) nach Anspruch 11, dadurch gekennzeichnet, daß die Mittel zum Zusammenfassen anhand der Sprachnachrichtendatei (15) eine Web-Seite (website) erzeugen und die Mittel zum Versenden die Web-Seite über das Datennetzwerk (16) auf einem Web-Server (23) ablegen, auf den eine Person (18), die die Sprachnachricht (13) weiter bearbeitet, zugreift.

14. Aufnahmevorrichtung (3) nach einem der Ansprüche 11 bis 13, dadurch gekennzeichnet, daß die Aufnahmevorrichtung (3) Teil einer Telekommunikations (TK)-Anlage (1) ist.

15. Aufnahmevorrichtung (3) nach einem der Ansprüche 11 bis 14, dadurch gekennzeichnet, daß die Mittel zum Speichern des Inhalts der Sprachnachricht (13) als eine Sprachdatei (14) Mittel zum Komprimieren der Sprachdatei (14) vor dem Speichern aufweisen.

16. Aufnahmevorrichtung (3) nach einem der Ansprüche 11 bis 15, dadurch gekennzeichnet, daß das Datennetzwerk (16) als ein firmeninternes Intranet ausgebildet ist.

17. Aufnahmevorrichtung (3) nach einem der Ansprüche 11 bis 15, dadurch gekennzeichnet, daß das Datennetzwerk (16) als ein weltumspannendes Datennetzwerk, insbesondere als das Internet, ausgebildet ist.

18. Telekommunikations (TK)-Anlage (1) mit mehreren zu einem Telekommunikations (TK) -Netzwerk zusammengeschlossenen Telekommunikations (TK)-Endgeräten (2), dadurch gekennzeichnet, daß die TK-Anlage (1) mindestens eine Aufnahmevorrichtung (3) nach einem der Ansprüche 11 bis 17 aufweist.

19. Arbeitsplatz zum Bearbeiten einer Sprachnachricht (13), die gemäß dem Verfahren nach einem der Ansprüche 1 bis 10 bearbeitet worden ist, **gekennzeichnet durch**
- Mittel zum Zugriff auf eine Sprachnachrichtendatei (15), die ein als Textdatei (11) vorhandenes teilweise ausgefülltes elektronisches Formular (9) und den als Sprachdatei (14) vorhandenen Inhalt der Sprachnachricht (13) umfaßt,
- Mittel zur Ausgabe des Inhalts der Textdatei (11),
- Mittel zur Ausgabe des Inhalts der Sprachdatei (14),
- Mittel zur Entgegennahme des in Text umgewandelten Inhalts der Sprachdatei (14) und zur Eingabe des Inhalts in die Textdatei (11) und
- Mittel zur Bereitstellung der Textdatei (11) für eine Weiterbearbeitung.

20. Arbeitsplatz nach Anspruch 19, dadurch gekennzeichnet, daß der Arbeitsplatz Mittel zum Umwandeln des Inhalts der Sprachdatei (14) in Text aufweist.
